# EUROPEAN PATENT APPLICATION

(11) **EP 4 290 434 A1**
(43) Date of publication of application: **13.12.2023**
(21) Application number: 23160660.9
(22) Date of filing: 08.03.2023
(51) Int. Cl.: G06Q 10/00, G06Q 50/28

(54) **PARCEL LOCKER SYSTEM HAVING REAL-TIME NOTIFICATION OF ADDITIONAL PARCELS PENDING RETRIEVAL BY A RECIPIENT**

(30) Priority: 25.05.2022 US 202217664904
(71) Applicant: Pitney Bowes Inc., Stamford, CT 06926 (US)
(72) Inventor: NERE, Rushikesh, 412308 Fursungi, Pune, Maharashtra (IN)
(74) Representative: Hoffmann Eitle

(57) **Abstract**

The present invention relates to a parcel locker system wherein when a recipient opens a locker having a parcel for retrieval, the system checks to determine if there are any other lockers that contain a parcel awaiting retrieval by that recipient. If it is determined that there are additional lockers that contain a parcel awaiting retrieval by that recipient, a notification is triggered to alert the recipient of these additional lockers. Such notification can be provided by an indicator light on the front of the specific lockers that contain a parcel for the recipient, or by the sending of a text message or email, that the recipient will receive while at the locker system. This allows the recipient to retrieve parcels delivered to multiple lockers, as the recipient will now be prompted to open the other non-opened lockers to collect all of their parcels in a single trip.

## Description

### FIELD OF THE INVENTION

The invention disclosed herein relates generally to secure parcel delivery, and more particularly to parcel lockers that provide real-time notification of additional parcels pending retrieval by a recipient.

### BACKGROUND OF THE INVENTION

Parcel locker systems have a plurality of lockable compartments adapted to securely store parcels. They are used as a pickup and/or drop off location to temporarily store parcels (sometimes also referred to as packages) until retrieved by an authorized party, e.g. the parcel recipient, a carrier, or the like. Such parcel lockers systems can be used by an organization to manage the delivery of a parcel to an individual recipient where the package is delivered to a central mail room of the organization for delivery to the specified individual recipient. Such organizations can include, for example a business, corporation, college campus and the like. When a parcel is delivered to the organization's mail room, a mail room staff member places the parcel into the locker system. A notification is sent to the intended recipient, such as, for example, an email or text message, indicating that the parcel is available in the locker system for retrieval. The notification will typically include a barcode or identification number for the recipient to use to retrieve the package. The recipient can then go the locker system at their convenience to retrieve the parcel. At the locker system, the recipient scans the access barcode or inputs the identification number received in the notification, and verifies their identity. The appropriate locker door then opens, allowing the recipient to retrieve the parcel and go on their way. Such locker systems offer 24/7 convenient, contactless package pickup, keeping both mail room staff and recipients safe.

Currently, if a recipient receives multiple parcels over a period of time, the recipient will get multiple notifications about the availability of the parcels for retrieval. If the recipient has received several packages before going to the locker to retrieve them, there is the possibility that the recipient may not recall all of the parcels that are available in the locker system for retrieval, as they may not remember each of the received notifications. This can result in the recipient retrieving only some of the parcels that are currently awaiting retrieval in the locker system, while forgetting that there are others in the locker system that are still awaiting retrieval. Hence, a recipient may open some of the lockers that contain parcels for their retrieval, but fail to open other lockers which also have parcels for their retrieval. This will require the recipient to return to the locker system once again, upon realizing there are still parcels pending pickup, to open the remaining lockers and retrieve the parcels.

Thus, there exists a need for a parcel locker systems that can provide real-time notification of additional parcels pending retrieval by a recipient.

### SUMMARY OF THE INVENTION

The present invention addresses the above problems by providing a parcel locker system that provides real-time notification of additional parcels pending retrieval by a recipient. In accordance with embodiments of the present invention, when a recipient opens a locker having a parcel therein for retrieval, the locker system checks to determine if there are any other lockers in the locker system that contain a parcel awaiting retrieval by that recipient. If it is determined that there are additional lockers that contain a parcel awaiting retrieval by that recipient, a notification is triggered to alert the recipient of these additional lockers. Such notification can be provided in a humanly perceptible form, such as by the illumination of an indicator light on the front of the specific lockers that contain a parcel for the recipient. Notification can also be provided by the sending of a text message or email, that the recipient will receive while at the locker system. This will allow the recipient to retrieve the parcels delivered to multiple lockers, as the recipient will now be prompted to open the other non-opened lockers to collect all of their parcels in a single trip.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### DESCRIPTION OF THE DRAWINGS

The accompanying drawings illustrate presently preferred embodiments of the invention, and together with the general description given above and the detailed description given below, by way of example serve to explain the invention in more detail. As shown throughout the drawings, like reference numerals designate like or corresponding parts.
FIG. 1 illustrates in block diagram form the major components of a locker system according to embodiments of the present invention;
FIG. 2 illustrates a front/side view of a locker system according to embodiments of the present invention;
FIG. 3 illustrates in flowchart form the operation of the processing performed by the locker system according to embodiments of the present invention; and
FIG. 4 illustrates a front/side view of a locker system according to embodiments of the present invention operating according to the processing of Fig. 3.

### DETAILED DESCRIPTION OF EMBODIMENTS OF THE PRESENT INVENTION

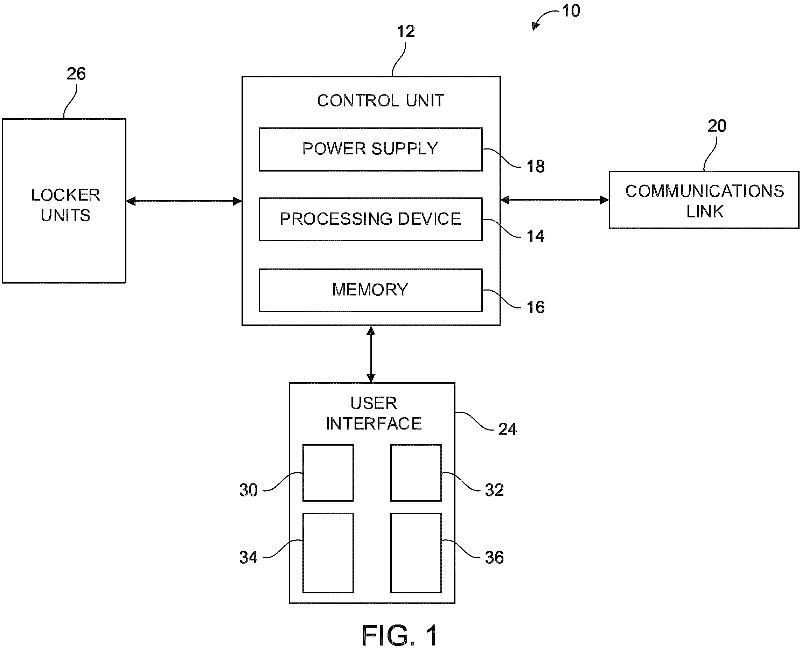

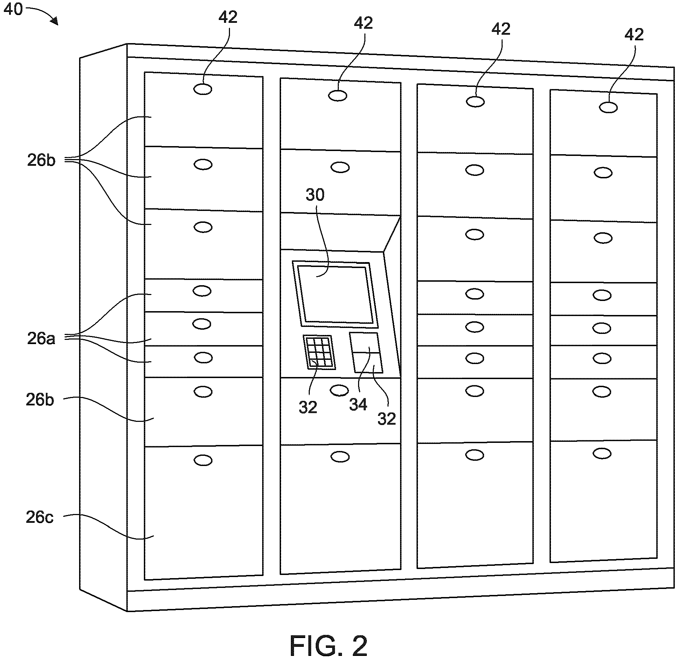

In describing embodiments of the present invention, reference is made to the drawings, wherein there is seen in Fig. 1 in block diagram form the major components of a locker system 10 according to embodiments of the present invention. Locker system 10 includes a plurality of lockers 26, which may comprise lockers of different sizes and configurations. An exemplary configuration of lockers will be described with respect to Fig. 2. Each of the lockers 26 is secured by a locking device (not shown), which can be, for example, a mechanical, electrical, magnetic, or any other type of suitable device capable of securing the door of a locker that can be controlled by electronical signals. The control of the lockers 26 locking/unlocking is provided by signals from a control unit 12. Control unit 12 includes a processing device 14, which may be a specially constructed processing device for the required purposes, or may be a general purpose computer processing device selectively activated or reconfigured by a computer program (described further below) stored in a memory 16. Such a computer program may alternatively be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, which are executable by a processing device 146 within the control unit 12. A power supply 18 is provided to provide power to the components of the control unit 12, as well as the other components of the locker system 10 as further described below. One of ordinary skill in the art would be familiar with the general components of a control unit upon which the method of the present invention may be performed.

Control unit 12 is coupled to a communication link 20. The communication link 20 is a hardware component that allows the locker system 10 to transmit information via an appropriate wireless communication, such as Bluetooth. The communication link 20 further allows the locker system to connect to and transmit messages across current telecommunications/network protocols to remote devices (not shown) that can be used to remotely monitor and operate the locker system 10. The operation of the communication link 20 is controlled by the processing device 14. The communication link 20 is adapted, in use, to provide an electronic message to an identified recipient when a parcel is placed in a locker for retrieval by the recipient. For example, the communication link 20 can provide a text message or an email to a recipient informing the recipient that a package for retrieval has been placed in the locker system. Such placement of the parcel could be, for example, by a carrier service or by mail room staff.

Locker system 10 further includes a user interface 24. User interface 24 preferably comprises one or more of a display unit 30, an input device 32 and a speaker 34. The user interface 24 allows communication between the locker system 10 and a user. The display unit 30 is a screen such as an LED screen or an OLED screen, and is preferably a touch screen. The input device 32 can be a keyboard or a series of buttons. The speaker 34 allows for voice communication between the locker system 10 and a user. The user interface 24 may further include a scanner 36, that can be used by a user to scan a barcode that may be provided to the user via email.

Referring now to Fig. 2, there is illustrated a front/side view of a locker system 40 according to embodiments of the present invention. The locker system 40 comprises a plurality of lockers 26 having different sizes. Small lockers are designated 26a, medium lockers are designated 26b and large lockers are designated 26c. As illustrated, the lockers are situated in a matrix of columns and rows, but is should be understood that any combination and layout of the different sized lockers can be provided. In one column some of the lockers are not provided, and instead the user interface 24 is located in that space, consisting of a display unit 30, an input device 32, a speaker 34 and a scanner 36. An indicator light 42 is provided on the door of each locker 26. The indicator lights 42 can be selectively controlled by the control unit 12 to illuminate one or more colors to provide an indication to a user as described further below.

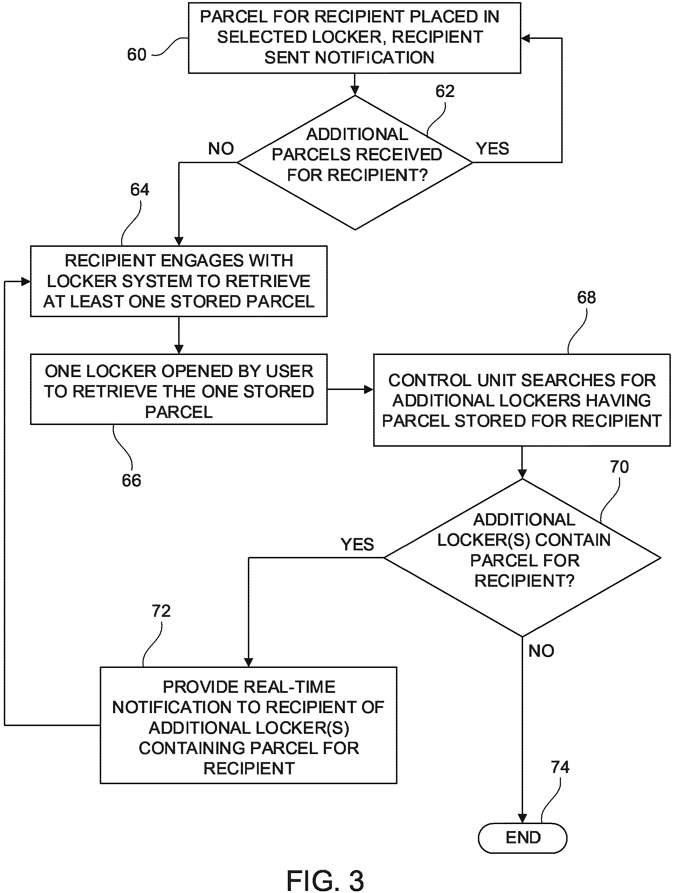

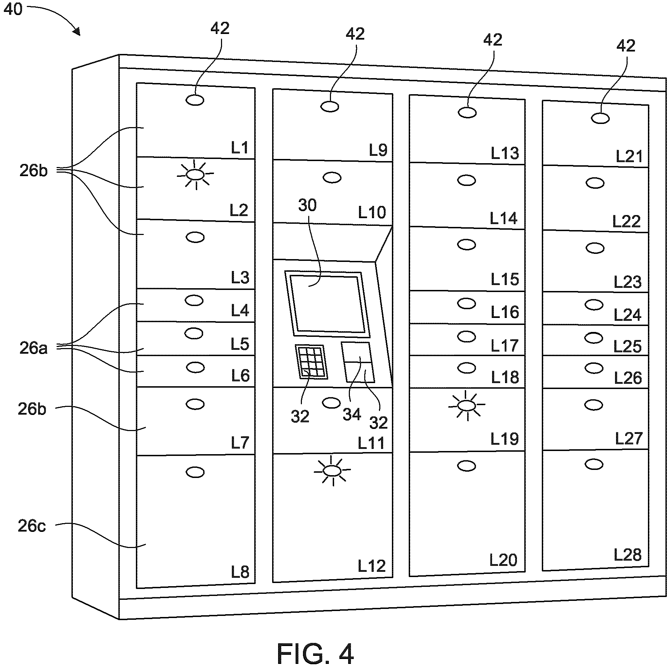

Referring now to Fig. 3, there is illustrated in flowchart form the operation of the processing performed by the locker system 40 according to embodiments of the present invention. The operation of the system 40 as described in Fig. 3 will be illustrated utilizing the block diagram of Fig. 1 and the locker system 40 shown in Fig. 4, in which each of the lockers have been labeled in the lower right corner L1, L2, L3, ... L28 for ease of identification. Referring again to Fig. 3, in step 60 when a parcel is received for an intended recipient and placed in a selected locker, a notification is sent to the intended recipient. Thus, for example, if the locker system 40 is installed at a university campus, a parcel addressed to a specific student will be delivered to the central mail room of the university. The university mail room staff will place the parcel into a locker and input the student information, e.g., name, email address, text number, etc., and assigned locker number into the control unit 12 (Fig. 1), using for example, the user interface 24 (Fig. 1) or remotely using another device that communicates the information to the control unit via the communication link 20. For example, the parcel may be placed into locker L3 as illustrated in Fig. 4. The information is then stored in the memory 16. Alternatively or in addition to storing the information in the memory 16, the information could be sent utilizing the communication link to a remote location and stored remotely. The communication link 20 provides a notification to the intended recipient (the student) that a parcel is available for pick up at the locker system 40, and provides the information necessary for retrieval of such parcel. Such notification can be provided, for example, by email or text message.

In step 62, it is determined if additional parcels have been received for the student. If so, the process described with respect to step 60 is repeated, and the newly received parcels are placed into different lockers and new notifications are sent to the intended recipient of the availability of the parcels for pick up at the locker system 40. For example, over the course of a week, a student may receive four deliveries of parcels and has not retrieved any of them. In such an example, the student may have parcels available for pick up in the locker system 40 in locker L3 (from above) and also in lockers L12, L19 and L24. The student would have received separate notifications for each of these parcels being available for pick up over the course of the week.

At some point in time, in step 64 the intended recipient of the parcels (e.g., the student) will visit the locker system 40 to retrieve at least one of the parcels that are currently being held therein. The student user engages with the locker system 40 by providing the information contained in the notification email or text regarding at one of the stored parcels. For example, the student could input a pin number included in the notification message, or scan a barcode provided in the notification message. For example, suppose the student receives the notification message for the most recent parcel delivery that is stored in locker L24, and decides to visit the locker system 40 to retrieve that parcel. Upon input of the information provided in the notification message for the parcel stored in locker L24, in step 66 the control unit 12 will confirm the input information matches the information stored in the memory 16 (or remotely) and upon such confirmation cause the lock of locker L24 to unlock, thereby allowing the student to retrieve the parcel that is stored in locker L24.

Once the student has retrieved the parcel stored in locker L24, the student may leave the area of the locker system 40. Recall, however, that the student received four deliveries of parcels over the past week, and thus there are four parcels awaiting retrieval by the student. Although the student received multiple notifications (one for each parcel placed in the locker system 40), there is the possibility that the student may not recall all of the parcels that are available in the locker system for retrieval, e.g., in the current example, those stored in lockers L3, L12 and L19, as the student may not recall each of the received notifications. This can result in the student retrieving only some of the parcels that are currently awaiting retrieval in the locker system, while forgetting that there are others in the locker system that are still awaiting retrieval. In accordance with the present invention, in step 68 the processing device 14 of the control unit 12 performs a search of the currently stored records, either in the memory 16 or a remote location, to determine if there are additional lockers that currently have a parcel stored for that student. In step 70 it is determined if any additional lockers containing a parcel for the student are present. If not, then the processing can end in step 74, as the student has retrieved the only parcel awaiting pick up, i.e., the parcel from locker L24. However, if in step 70 it is determined that there are additional lockers containing parcels for the student, then in step 72 the control unit 12 will cause a real-time notification to be provided to alert the student to the presence of the additional locker(s) containing a parcel awaiting retrieval by the student. Such notification could be, for example, the activating of the indicator light 42 for those lockers containing a parcel for the student. Thus, as illustrated in Fig. 4, the indicator lights 42 for lockers L3, L12 and L19 are lit, providing an indication to the student that there are additional parcels within those lockers awaiting retrieval by the student. The indicator lights 42 could, for example, go from being off to turning on as a colored light, e.g., a green light, or could go from being red and changing to green. This humanly-perceptible indication will notify the student that there are additional parcels awaiting retrieval, and prompt the student to review the received notifications. The student can then engage again with the locker system 40 in step 64 to repeat the process for the additional received notifications. In addition to or alternatively to the indicator lights 42 being activated, in step 72 the control unit 12 could also cause a new real-time notification to be sent to the student, via either an email message or text message. The real-time notifications will prompt the student to retrieve all of the parcels intended for student that are currently stored in the locker system, as the student will now be prompted to open the other non-opened lockers to collect all of their parcels in a single trip.

While preferred embodiments of the invention have been described and illustrated above, it should be understood that they are exemplary of the invention and are not to be considered as limiting. Additions, deletions, substitutions, and other modifications can be made without departing from the scope of the present invention. Accordingly, the invention is not to be considered as limited by the foregoing description but is only limited by the scope of the appended claims.

## Claims

1. A method of operating a parcel locker system having a plurality of lockable compartments adapted to securely store parcels, the method comprising:
receiving, from an input device of the parcel locker system, information from a user related to a first package stored in a first one of the plurality of lockable compartments;
confirming, by a control unit of the parcel locker system, that the information received from the user matches stored information;
upon confirming that the information received from the user matches the stored information, unlocking the first one of the plurality of lockable compartments to allow the first package stored in the first one of the plurality of lockable compartments to be retrieved by the user;
searching, by the control unit, the stored information to determine if there is a second one of the plurality of lockable compartments that contains a second package to be retrieved by the user; and
providing, by the control unit, upon determining that there is a second one of the plurality of lockable compartments that contains a second package to be retrieved by the user, a real-time humanly perceptible notification to the user indicating that there is a second one of the plurality of lockable compartments that contains a second package to be retrieved by the user.

2. The method of claim 1, wherein the step of providing a real-time humanly perceptible notification to the user indicating that there is a second one of the plurality of lockable compartments that contains a second package to be retrieved by the user further comprises:
lighting an indicator light provided on the second one of the plurality of lockable compartments.

3. The method of claim 1, wherein the step of providing a real-time humanly perceptible notification to the user indicating that there is a second one of the plurality of lockable compartments that contains a second package to be retrieved by the user further comprises:
sending a text message to a mobile device associated with the user.

4. The method of claim 1, wherein the step of providing a real-time humanly perceptible notification to the user indicating that there is a second one of the plurality of lockable compartments that contains a second package to be retrieved by the user further comprises:
sending an email message to an email address associated with the user.

5. The method of any preceding claim, wherein the stored information is stored in a memory located within the parcel locker system.

6. The method of any of claims 1-5, wherein the stored information is stored remotely from the parcel locker system.

7. A parcel locker system comprising:
a plurality of lockable compartments adapted to securely store parcels;
a user input device;
a control unit having a processor, the control unit coupled to the user input device and to each of the plurality of lockable compartments to engage and disengage a locking device, the processor being programmed to:
receive, from the user input device of the parcel locker system, information from a user related to a first package stored in a first one of the plurality of lockable compartments;
confirm that the information received from the user matches stored information;
upon confirming that the information received from the user matches the stored information, unlock the first one of the plurality of lockable compartments to allow the first package stored in the first one of the plurality of lockable compartments to be retrieved by the user;
search the stored information to determine if there is a second one of the plurality of lockable compartments that contains a second package to be retrieved by the user; and
provide, upon determining that there is a second one of the plurality of lockable compartments that contains a second package to be retrieved by the user, a real-time humanly perceptible notification to the user indicating that there is a second one of the plurality of lockable compartments that contains a second package to be retrieved by the user.

8. The parcel locker system of claim 7, further comprising:
an indicator light provided on each of the plurality of lockable compartments, wherein the real-time humanly perceptible notification includes lighting the indicator light provided on the second one of the plurality of lockable compartments.

9. The parcel locker system of claim 7, wherein the real-time humanly perceptible notification includes sending a text message to a mobile device associated with the user.

10. The parcel locker system of claim 7, wherein the real-time humanly perceptible notification includes sending an email message to an email address associated with the user.

11. The parcel locker system of any of claims 7 to 10, further comprising:
a memory device coupled to the processor, wherein the stored information is stored in the memory device located within the parcel locker system.

12. The parcel locker system of any of claims 7 to 10, wherein the stored information is stored remotely from the parcel locker system.
